# EUROPÄISCHE PATENTSCHRIFT

(11) **EP 1 247 030 B1**
(45) Veröffentlichungstag und Bekanntmachung des Hinweises auf die Patenterteilung: **03.03.2004**
(21) Anmeldenummer: 00988625.0
(22) Anmeldetag: 17.11.2000
(51) Int. Cl.: F16H 61/02

(54) **VERFAHREN ZUR STEUERUNG EINES ELEMENTES EINES ANTRIEBSSTRANGS EINES FAHRZEUGS UND STEUEREINHEIT ZUR DURCHFÜHRUNG**
METHOD FOR CONTROLLING AN ELEMENT OF A DRIVE TRAIN OF A VEHICLE AND CONTROL UNIT FOR PERFORMING SAID METHOD
PROCEDE POUR PILOTER UN ELEMENT D'UNE CHAINE CINEMATIQUE DE VEHICULE ET UNITE DE COMMANDE APPROPRIEE

(30) Priorität: 29.12.1999 DE 19963468
(43) Veröffentlichungstag der Anmeldung: 09.10.2002
(73) Patentinhaber: ROBERT BOSCH GMBH, 70442 Stuttgart (DE)
(72) Erfinder: FREI, Rasmus, 70193 Stuttgart (DE); STEIGER-PISCHKE, Andrea, 71287 Weissach (DE); SCHWIENTEK, Christian, 74172 Neckarsulm (DE); POLJANSEK, Marko, 72768 Reutlingen (DE); HERMSEN, Wolfgang, 73230 Kirchheim (DE); PAEULGEN, Markus, 73728 Esslingen/Neckar (DE)
(86) Internationale Anmeldenummer: PCT/DE2000/004043
(87) Internationale Veröffentlichungsnummer: WO 2001/050039

(56) Entgegenhaltungen:
- EP-A- 0 950 839
- WO-A-97/01051
- DE-A- 3 802 241
- FR-A- 2 775 749
- US-A- 5 467 277
- US-A- 5 832 401
- BAUKNECHT G ET AL: "DAS NEUE FUNFGANG-AUTOMATIKGETRIEBE FUR DIE UBERARBEITETEN BMW ACHTZYLINDERMOTOREN" ATZ AUTOMOBILTECHNISCHE ZEITSCHRIFT,DE,FRANCKH'SCHE VERLAGSHANDLUNG. STUTTGART, Bd. 98, Nr. 10, 1. Oktober 1996 (1996-10-01), Seiten 508-514,516,51, XP000629647 ISSN: 0001-2785 in der Anmeldung erwähnt

## Beschreibung

### Stand der Technik

Die Erfindung betrifft ein Verfahren zur Steuerung eines Elementes eines Antriebsstranges, welches durch ein Bedienmittel beeinflußbar ist, in einem Fahrzeug und eine Steuereinheit zur Durchführung des Verfahrens gemäß den Oberbegriffen der unabhängigen Ansprüche.

Dazu zeigt die DE 38 02 241 A1 eine gattungsgemäße elektronische Steuereinheit für Kraftfahrzeuge, welches eine Zentraleinheit, einen Programmspeicher, einen Datenspeicher sowie eine Ein-/Ausgabe-Einheit mit mehreren Ein- und Ausgabekanälen umfaßt. Dabei ist die Grundausstattung gleichzeitig für mehrere unterschiedliche individuelle Ausführungsvarianten auslegbar. Dieser Grundausstattung ist ein Codespeicher für wenigstens ein Codewort zur Bestimmung der jeweiligen individuellen Ausführungsvariante zugeordnet. Zum Zeitpunkt des Einbaus in das Fahrzeug oder auch später wird das für die Fahrzeugausrüstungsvariante spezifische Codewort in den Codespeicher eingegeben, um damit die passende spezielle Steuergeräteausführung anzusteuern bzw. freizugeben. Die zugehörigen Programmabschnitte, Datensätze, Ein- und/oder Ausgabekanäle sind in Abhängigkeit vom jeweiligen Inhalt des Codespeichers ansteuerbar. Dabei wird somit die, dem jeweiligen Fahrzeugtyp entsprechende Variante des Steuergeräts durch Eingabe des Codewortes in den Codespeicher bleibend festgelegt. Bei einer nachträglichen Änderung z. B. zusätzlichen Komponenteneinbau, kann, wenn dies bereits vorgesehen war, durch ein neues Codewort diese neue Komponente berücksichtigt werden. Für den laufenden Betrieb des Fahrzeugs ist aber dann die entsprechende eine Variante festgelegt.

Daneben sind vielfältige Steuerungsvarianten für Elemente des Antriebsstranges, wie z. B. Motor, Kupplung, Getriebe bekannt. So zeigt der Artikel "Das neue 5-Gang-Automatikgetriebe ..." aus der Automobiltechnischen Zeitschrift 98 aus 1996, Seiten 508 bis 519 eine elektronische Getriebesteuerung bei welcher einerseits durch ein Getriebebedienfeld und andererseits durch eine Getriebeautomatik unterschiedliche Betriebsarten erkennbar und vorgebbar sind. Dabei ist allerdings die Hardware wie Steuergerät und/oder Getriebebedienfeld mit den zugehörigen Steuerprogrammen sehr unflexibel verknüpft und zwar insofern als jede Getriebebedienfeld-Steuergerät-Steuerprogramm-Kombination getrennt abgestimmt wird.

Es zeigt sich somit, daß der Stand der Technik nicht in jeder Beziehung optimal Ergebnisse zu liefern vermag.

### Vorteile der Erfindung

Die Erfindung gemäß den unabhängigen Ansprüchen 1, 7 und 9 zeigt ein Verfahren und eine Steuereinheit zur Steuerung eines Elementes eines Antriebsstranges, welches durch ein Bedienmittel beeinflußbar ist, in einem Fahrzeug mit einer Steuereinheit und einem Speichermittel, wobei das Element und/oder das Bedienmittel in verschiedenen Varianten ausführbar ist. Dabei ist wenigstens eine Kennung in dem Speichermittel abgelegt, wobei die Kennung die jeweilige Variante des Elementes und/oder des Bedienmittels repräsentiert die in dem Fahrzeug enthalten ist. Das Element des Antriebsstranges wird abhängig von der jeweiligen Kennung entsprechend der jeweiligen Variante durch die Steuereinheit gesteuert, wobei vorteilhafterweise unterschiedliche Zustände der jeweiligen Variante des Elementes vorgegeben werden und für jeden möglichen Zustand jeweils eine Kennung applizierbar zugeordnet ist, wobei die jeweilige Kennung Steuerinformationen enthält, die Steuereinheit die Steuerinformationen der Kennung auswertet und die jeweilige Variante des Elementes durch die Steuereinheit entsprechend der Auswertung der Steuerinformationen angesteuert wird.

Zweckmäßigerweise wird somit, insbesondere im Betrieb, für jeden Zustand den das Element einnimmt oder einnehmen wird eine Kennung zur Verfügung gestellt.

Dadurch, daß die Steuerung abhängig von den Steuerinformationen in der Kennung durchgeführt wird, erfolgt vorteilhafterweise eine Entkopplung von der darunterliegenden Hardware.

Somit können die Steuerprogramme und/oder Steuerdaten unabhängig von einer konkreten Elementstruktur bzw. Antriebsstrangstruktur, insbesondere der Struktur des Getriebes bzw. Getriebebedienfeldes als Obermenge erstellt werden, wobei eben nur die zu realisierenden Zustände und Zustandsübergänge unabhängig von der Hardware zu berücksichtigen sind, und damit beliebige Anordnungen, insbesondere des Antriebsstranges bzw. Getriebes und des Getriebebedienfeldes, zugrundegelegt werden können.

Vorteilhafterweise wird jedem Zustand applizierbar ein Wertetupel zugeordnet das alle benötigten Informationen, sogenannte Steuerinformationen, für die verschiedenen Teile der Software enthält, ausdrücklich auch für ein Priorisierungsverfahren bezüglich der Steueranforderungen. Diese Teile der Software bzw. die entsprechende Steuerung greift für ihre Berechnungen bzw. Ermittlungen dann zweckmäßigerweise nur noch auf die Wertetupel (Steuerinformation in den Kennungen) zurück ohne die eigentliche Rohinformation, insbesondere des Bedinmittels, insbesondere eines Getriebebedienfeldes, zu erfahren.

Somit kann vorteilhafterweise eine große Variantenvielfalt mit der gleichen Steuersoftware bzw. der gleichen Steuerung bedient werden, wodurch die Bauform bzw. Variante der Anordnung, insbesondere des Getriebebedienfeldes, keine Rolle spielt. Die Eingaben können dann zweckmäßigerweise z.B. über einen Bordkommunikationscomputer erfolgen, wobei jedem gültigen Eingabezustand ein Wertetupel (Steuerinformationen) zugeordnet wird.

Bei einer nachträglichen Änderung der Anordnung, insbesondere des Getriebebedienfeldes, muß nur der zugehörige Programmteil angepaßt werden und alle übrigen Programm- bzw. Softwareteile bleiben unverändert. Die Anpassung geschieht zweckmäßigerweise durch Anpassung der Steuerinformation bzw. deren Inhalt, also der Tupelwerte

Weitere Vorteile und vorteilhafte Ausgestaltungen ergeben sich aus der Beschreibung sowie den Merkmalen der Ansprüche.

### Zeichnung

Die Erfindung wird anhand der Zeichnung durch die nachfolgend beschriebenen Figuren dargestellt.

Figur 1 zeigt ein Übersichtsblockschaltbild eines Antriebsstranges mit zugehöriger Sensorik und der erfindungsgemäßen Steuerung.

In Figur 2 sind beispielhaft Zustände und Zustandsübergänge der Erfindung dargestellt.

Figur 3 zeigt Tabellen zur Zustandsermittlung mit den enthaltenen Kennungen und Steuerinformationen.

Figur 4 zeigt eine weitere Tabelle, als Ergänzung und zur Erläuterung weiterer Ausführungsbeispiele.

### Beschreibung der Ausführungsbeispiele

Die Erfindung wird im folgenden anhand von Ausführungsbeispielen beschrieben.

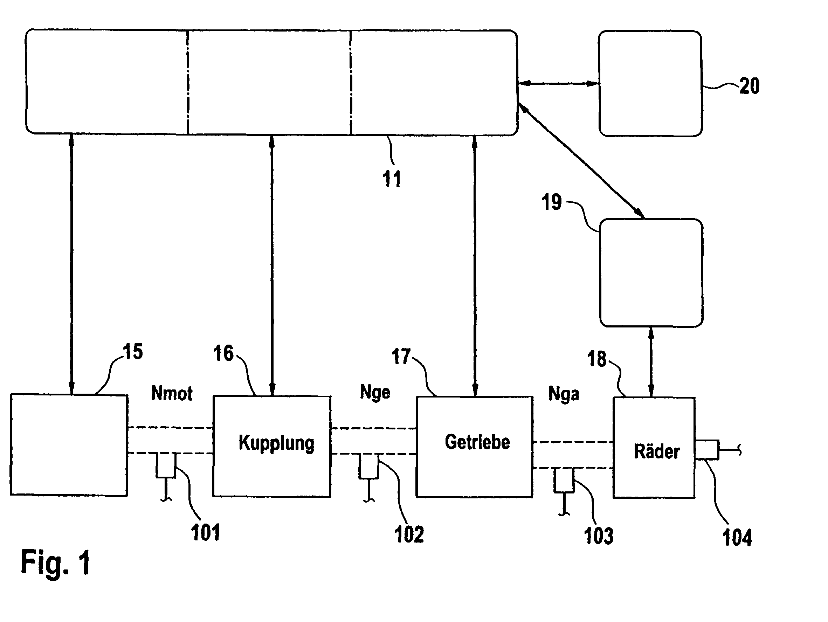

In Figur 1 ist mit 15 ein Antrieb, insbesondere eine Brennkraftmaschine, dargestellt. Der Antrieb 15 wird hier über eine Kupplung 16, die insbesondere eine Hauptkupplung bzw. Wandlerüberbrückungskupplung sein kann und ein Getriebe 17 mit den Antriebsrädern 18 des Fahrzeugs verbunden. Dabei kann auch vorgesehen sein, daß die Kupplung 16 dem Getriebe 17 nachgelagert ist. Bei dem Getriebe 17 handelt es sich beispielsweise um ein kontinuierlich in seiner Übersetzung veränderbares sogenanntes CVT-Getriebe. Der Antrieb 15, die Kupplung 16 sowie das Getriebe 17 werden durch entsprechende Steuerungen zusammengefaßt in Block 11 gesteuert. Dabei können, durch die strichpunktierten Linien dargestellt, die Antriebssteuerung die Kupplungs- und Wandlersteuerung sowie die Getriebesteuerung getrennt ausgeführt sein oder die Steuerung des Antriebsstranges als koordinierte Steuerung von Antrieb, Kupplung bzw. Wandler und Getriebe zentral erfolgen. Weiterhin ist zumindest die Erfassung der Motordrehzahl Nmot mit einem Sensor 101 und der Getriebeeingangsdrehzahl Nge mit Sensor 102 vorgesehen. Insbesondere bei CVT-Getrieben ist die Getriebeübersetzung in einem großen Bereich einstellbar. Durch ein Getriebebedienfeld 20 kann der Fahrer im allgemeinen zwischen der Position N (Neutral) der Position P (Parkstellung) und der Position D (Fahrstufe) wählen. Wählt der Fahrer die Position N (Neutral), so wird die Kupplung 16 geöffnet und der Kraftfluß im Antriebsstrang im wesentlichen unterbrochen. In der Neutralstellung kann sicherheitshalber noch ein geringer Kraftfluß vorgesehen sein. Weiterhin kann über Sensor 103 die Getriebeausgangsdrehzahl Nga, die der Fahrzeuggeschwindigkeit entspricht, erfaßt werden. Die Getriebeausgangsdrehzahl Nga wird ebenso wie die Getriebeeingangsdrehzahl Nge so wie die Motordrehzahl Nmot der Antriebsstrangsteuerung 11 zugeführt. Weiterhin erhält die Steuerung 11 Vorgaben aus dem Getriebebedienfeld 20 sowie weiteren Steuereinheiten 19, wie insbesondere einer Steuereinheit zur Beeinflussung der Bremswirkung bzw. Regelung der Fahrstabilität und/oder Sicherheit des Fahrzeugs. Eine solche Bremswirkungssteuerung 19 erhält seinerseits Eingangsgrößen, beispielsweise die Raddrehzahl, erfaßbar mittels Raddrehzahlsensorik 104, oder ein mögliches Gearmoment.

Die Sensorgrößen, Größen eines Bedienelementes 20, insbesondere eines Getriebebedienfeldes, und Größen weiterer Steuereinheiten 19 sowie weitere nicht dargestellte Größen werden der Steuerung bzw. Steuereinheit 11 zugeführt. Abhängig von diesen Signalen bildet die Steuerung 11 Sollwerte bzw. Stellgrößen für eine integrierte Motorsteuerung, eine Kupplungs- bzw. Wandlersteuerung sowie eine Getriebesteuerung. Diese Steuerungen bzw. die Steuerung 11 liefern wiederum Stellsignale an die entsprechenden Stellglieder des Antriebes 15, der Kupplung 16 und des Getriebes 17. Durch Steuerung führen Stellglieder und Schaltelemente die gewünschten Wandlungseffekte aus. Die Betätigung der Stellglieder erfolgt direkt vom Fahrer oder automatisch mit Hilfe von Sensoren deren Signale in einem hydraulischen oder elektronischen Steuergerät nach einem vorgegebenen Programm weiterverarbeitet werden.

Im Weiteren wird insbesondere die Steuerung des Getriebes 17 durch die Steuereinheit 11 dargestellt. Hierzu werden durch Sensoren Größen wie beispielsweise Getriebeabtriebsdrehzahl, Lastzustand und Drehzahl des Antriebs erfaßt. Ebenso gehen Wählhebelposition sowie die Stellung des Programm und Kickdownschalters sowie weitere Größen anderer Steuergeräte dabei ein. Das Steuergerät 11 verarbeitet diese Informationen nach vorgegebenen Programmen und bestimmt daraus die an das Getriebe auszugebenden Größen. So besteht das Getriebebedienfeld 20 üblicherweise aus einem Wählhebel, der in mehreren Positionen fest einrastet, und aus einer beschränkten Anzahl von Tastern oder Schaltern. Aus der Menge aller gültigen Kombinationen (Wählhebel, Taster und Zeitverhalten) ergibt sich dabei zu jedem Zeitpunkt ein aktueller Zustand des Getriebebedienfeldes. Dieser aktuelle Zustand des Getriebebedienfeldes und die vorher genannten weiteren Informationen bilden schließlich einen Getriebezustand zu einem bestimmen Zeitpunkt ab. Das Getriebebedienfeld besteht somit außer dem Wählhebel oftmals eben aus Schaltern und/oder Tastern, die das Fahrverhalten beeinflussen sollen. Typische Beispiele dafür sind Winter-/Sporttaster/-Schalter und die Manuellstellung des Wählhebels sowie eventuell eine Spar- bzw. Economic-Funktion. Dabei kann es zu einer großen Variantenvielfalt über verschiedene Projekte kommen, die sich aus einer unterschiedlichen Anzahl von Bedienelementen und der Ausführung der Bedienelemente ergibt.

Die Steuerprogramme bzw. Steuerdaten zur Bestimmung der optimalen Übersetzung eines Automatikgetriebes setzen sich aufgrund unterschiedlicher, sich teilweise widersprechender Anforderungen (z.B. Wunsch nach Benzineinsparung im Gegensatz zum Wunsch nach hoher Momentenreserve) aus mehreren Teilen zusammen, die jeweils einer Anforderung versuchen gerecht zu werden. Aus allen Anforderungen wird mittels eines Priorisierungsverfahrens ein endgültiges Ergebnis ermittelt.

Jedem Zustand, vorgebbar durch die Eingangsgrößen in die Steuereinheit 11 wird applizierbar eine Kennung zugeordnet. D.h., es existiert nicht nur eine statische Variante für eine spezielle Getriebeanordnung bzw. Antriebsstranganorndung sondern es werden innerhalb der selben Anordnung ebenfalls unterschiedliche Zustände unterschieden, wobei eben diesen Zuständen jeweils eine Kennung zugeordnet wird, die die Steuerinformation enthält und eben auch die Informationen für die Priorisierung der Anforderungen. Bei der Steuerung wird nur noch auf die Kennung bzw. die in den Kennungen enthaltenen Steuerinformationen zurückgegriffen ohne die eigentliche Rohinformation des Getriebebedienfeldes oder der anderen Eingangssignale zu erfahren.

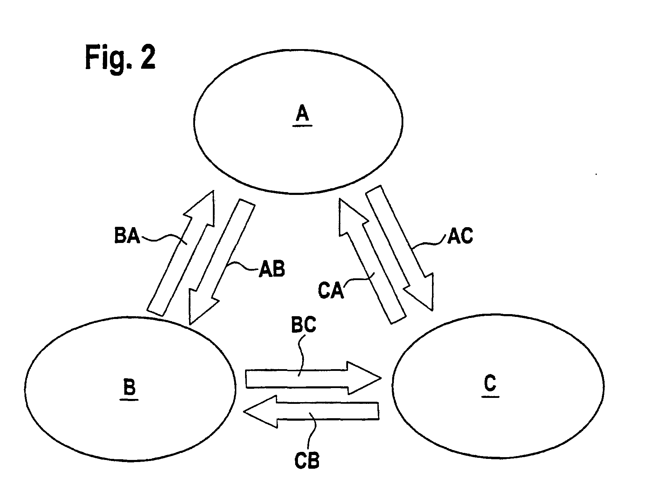

Figur 2 zeigt dabei allgemein eine Zustandsdarstellung mit den zugehörigen Zustandsübergängen. In einem Ausführungsbeispiel könnte beispielsweise der Zustand A Neutral entsprechen. Das hieße also, daß beispielsweise das Getriebebedienfeld die Regelstellung N einnähme. Aus diesem Zustand kann durch Zustandsübergang AC zu Zustand C übergegangen werden. Zustand C ist beispielsweise eine spezielle Winterabstimmung. Der Übergang AC kann dabei einerseits durch Bedienelemente durch den Fahrer erfolgen oder andererseits durch Informationen von Sensoren oder weiteren Steuergeräten, beispielsweise im Fall eines Winterbetriebes durch Temperatursensorik oder eine Fahrstabilitätserkennung ausgelöst sein. Ebenso kann aus einem Zustand Winter durch Zustandsübergang CA in einen Neutralzustand, eben hier Zustand A, übergegangen werden, wieder durch äußere Informationen oder das Getriebebedienfeld.

Ebenso sind weitere Zustände wie B z.B. ein Sportzustand denkbar. Dabei kann aus dem Neutralzustand, also insbesondere der Neutralstellung N des Getriebebedienfeldes, mit Zustandsübergang AB in den Sportzustand gewechselt werden. Der Sportzustand des Getriebes bzw. Antriebsstranges kann dabei einerseits wieder durch Bedienelemente des Getriebebedienfeldes, insbesondere einen Programmwahlschalter oder einen Sporttaster, oder beispielsweise eine Fahrertyperkennung eines automatischen Getriebes ausgelöst werden. Die Auslöser für den Zustandsübergang AB kann auch eine Fahrertyperkennung durch Auswertung beispielsweise des Fahrpedals bei der Antriebsansteuerung sein. Wird ein sehr sportliches Fahrverhalten erkannt, erfolgt der Zustandsübergang in den Sportzustand, hier B. Ebenso wie beim Winterzustand kann auch hier aus dem Sportzustand B mittels Zustandsübergang BA in einen Neutralzustand A zurückgegangen werden. Dies kann wieder durch Betätigen eines Bedienelementes sein, eben beispielsweise das Ausschalten eines Sporttasters, das Betätigen des Wählhebels in Neutralstellung, usw. Ebenso sind weitere Zustandsübergänge BC und CB des Sportzustandes in den Winterzustand und umgekehrt denkbar. Aus Gründen der Übersichtlichkeit ist die Darstellung dabei auf drei Zustände beschränkt. Weiterhin wäre hier ein Normaler Fahrzeustand (als Standard vorgebbar), Fahren mit Begrenzung, ein Spar-oder Economic-Zustand, ein Off-Road-Zustand, etc. denkbar.

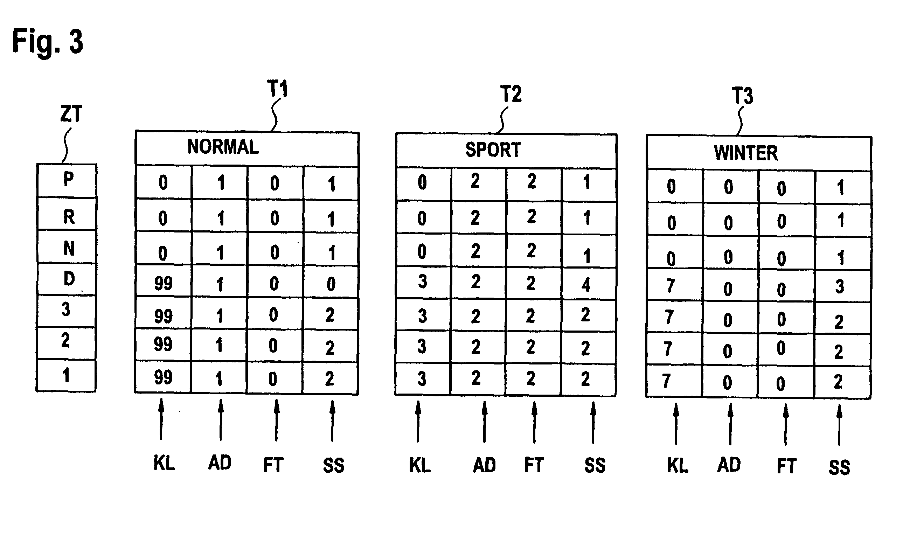

In Figur 3 ist beispielhaft eine Tasterkombination mit bestimmten Wählhebelwerten dargestellt. So existieren die Bedienelementvorgaben, insbesondere Taster bzw. Schalter, bzw. Zustandsvorgaben für Sport und Winter und wenn keiner dieser beiden anliegt, Normal. Dargestellt in Tabelle 1 T1, Tabelle 2 T2 und Tabelle 3 T3. Die Zuordnungstabelle ZT enthält beispielhaft die Wählhebelpositionen P für Parkstellung, R für Rückwärts, N wie Neutral, D wie Fahrbetrieb sowie die Begrenzungen 3, 2 und 1. Es kann somit eine 7 * 3 Matrix in diesem Ausführungsbeispiel erstellt werden, in der 21 unterschiedliche Reaktionen sprich 21 unterschiedliche Kennungen abgelegt sein können. Die vorher genannten Zustände werden damit durch jeweils eine Kennung repräsentiert. Bei gleichen Kennungen können die zugehörigen Vorgaben in einem Zustand zusammengefaßt werden. Beispielsweise könnten die Positionen P, R, N des Wählhebels, ohne daß in diesem Beispiel eine Sport- oder Wintereinstellung vorgesehen ist, also im Normalbetrieb, Tabelle 1 T1 zu einem Zustand zusammengefügt werden.

Bei den Einstellungen 1,2,3 bzw. 2,3,4 oder 2,3,4,5 usw. des Getriebebedienfeldes also einer Begrenzung bzw. Gangbeschränkung gibt es drei Möglichkeiten: Einerseits soll genau der angegebene Gang eingelegt werden, was bei einer Gangbestimmung zu einer Schaltung ebenso wie einer Schaltverhinderung führen kann. Zum Anderen soll die Gangmenge entsprechend dem angegebenen Gang eingehalten werden, was zu einer Rückschaltung ebenso wie einer Schaltverhinderung führen kann. Im Weiteren soll die Gangmenge entsprechend dem angegebenen Gang nicht verlassen werden, falls ein höherer Gang anliegt wird dieser aber akzeptiert, was zu einer Schaltverhinderung führen kann. Die Entscheidung welche der drei Möglichkeiten vorliegt kann durch das erfindungsgemäße Verfahren ebenfalls im Bedienelement stattfinden und ist applizierbar.

Um die Unterschiede bezüglich Steuerung, Antriebsstrang und/oder Bedienfeld, insbesondere Getriebebedienfeld, auf eine gemeinsame abstrakte Ebene zu heben ohne Kombinationsmöglichkeiten auszuschließen, werden die in den Kennungen enthaltenen Steuerinformationen zur Steuerung des Antriebsstranges, insbesondere des Getriebes, ausgewertet. Konkret besteht jeder Eintrag der Matrix, also jede Kennung beispielsweise aus den Bestandteilen Kennlinie KL, Adaption bzw. Adaptionsverfahren AD, Fahrertyp FT sowie Schaltsituation SS. Es werden also applizierte bzw. applizierbare Informationen, Steuerinformationen zur Verfügung gestellt, die vom aktuellen Zustand des Getriebebedienfeldes bzw. des Antriebsstranges, insbesondere des Getriebes abhängig sind. Die Kennlinieninformation KL beinhaltet dabei Identifikationen für alle möglichen Schaltkennlinien des Getriebes. Dies können Schaltkennlinien für ökonomischen Betrieb, Bergbetrieb, sportliche Fahrweise, Ralley oder Offroad, Winterbetrieb, Warmlauf, Kurvenfahrt, Komfort, eine Sportbergmatrix, Schaltkennlinien für ACC-Betrieb, für Anhängerbetrieb, usw. sein.

Eine Identifikation als Steuerinformation beispielsweise 99 erlaubt es keine fest vorgegebene Kennlinie zu verwenden. Im Beispiel in Figur 3 ist beispielsweise für den Sportbetrieb die Kennlinie 3 und für den Winterbetrieb eine Kennlinie 7 vorgesehen, wohingegen im Normalbetrieb, also Tabelle T1, keine fest vorgegebene Kennlinie (99) existiert, sondern im Betrieb wählbar bzw. vorgebbar ist. Für die Wählhebelstellungen P, R, N wird beispielsweise generell eine Schaltkennlinie 0 vorgesehen.

Die nächste Information betrifft die Adaption sprich das Adaptionsverfahren. Dabei kann beispielsweise unterschieden werden zwischen nicht adaptieren 0, ökonomisch adaptieren 1, sportlich adaptieren 2 und offroad adaptieren 4, welche den einzelnen Zuständen zuordenbar sind.

Neben einer differenzierteren Fahrertyperkennung beispielsweise durch Auswertung des Fahrpedals ist in der Kennung für jeden Zustand ein Fahrergrundtyp FT vorgebbar. Es werden beispielsweise verschiedene Grundtypen 1 bis 5, eben sportlich, ökonomisch, komfortbewußt, usw. unterschieden wobei beispielsweise ein Eintrag 0 der Vorgabe kein Fahrergrundtyp entspricht, also kein Grunttyp vorgegeben wird.

Die hier letzte Information der Kennung die Schaltsituation SS gibt bestimmte Schaltsituationen ausgelößt beispielsweise durch das Getriebebedienfeld vor. Ein 0-Eintrag deutet an, daß beispielsweise keine bestimmte Schaltsituation vorgegeben ist. Daneben kann mit 1 beispielsweise eine besondere Schaltsituation P, R, N entsprechend der Wählhebelstellungen vorgegeben sein, mit 2 eine Darstellung des Begrenzungsbetriebes, also hier der Stellungen 3, 2, 1 aus ZT, mit 3 beispielsweise die Schaltsituation Winter und mit 4 beispielsweise die Schaltsituation Sport. Weitere Schaltsituationen wie Warmlauf, Notlauf, Berg oder Kurve, insbesondere nicht durch das Getriebebedienfeld auslösbare, können dabei mit 5, 6, 7 usw. gekennzeichnet sein. Das Priorisierungsverfahren kann also auf die Identifikation der einzelnen Schaltsituationen zurückgreifen und beispielsweise entsprechend einer Zuordnungstabelle die unterschiedlichen Anforderungen priorisieren.

In einer Ausgestaltung wäre auch denkbar feststehende bzw. vorgebbare Priorisierungen einzelner Anforderungen und/oder der Zustandsauslösesignale in die Steuerinformationen direkt aufzunehmen und damit direkt auswertbar zu machen.

Durch die Einführung der Zustände und diesen zugeordneten Kennungen und den darin enthaltenen Steuerinformationen wird durch die Steuerprogramme nur noch auf die Steuerinformationen selbst zurückgegriffen, wodurch diese Hardware unabhängig ausgelegt werden können. Es wird also für die Berechnungen nur noch auf die Steuerinformationen der Kennungen zurückgegriffen ohne die eigentlichen Rohinformationen beispielsweise des Getriebebedienfeldes zu erfahren. Somit werden die Kennungen und die in ihnen enthaltenen Informationen im laufenden Betrieb der Steuerung entsprechend der möglichen Zustände und Zustandsübergänge umgeschaltet und es wird auf die entsprechenden, eindeutigen Steuerinformation zurückgegriffen, wobei diese, also hier eben KL, AD, FT, SS über alle Varianten der Anordnungen des Antriebsstranges und/oder des Getriebebedienfeldes (vgl. Fig.1) festgelegt werden und darauf unabhängig von der jeweiligen Anordnung zugegriffen wird.

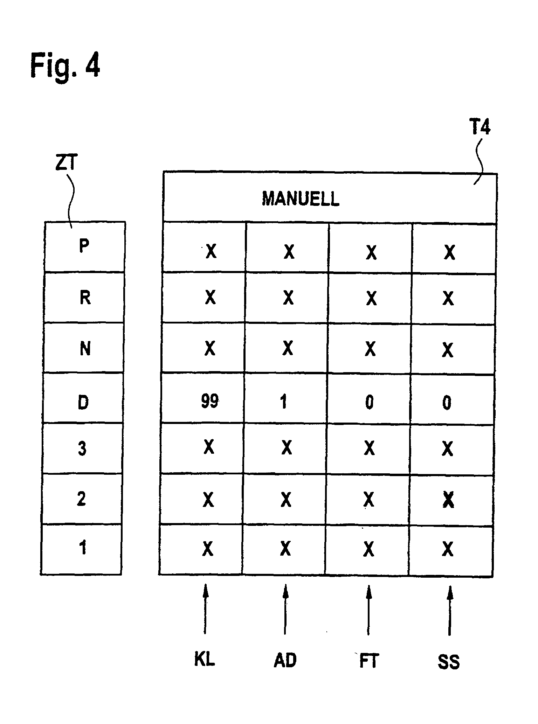

In Figur 4 ist eine weitere Option Manuell in Tabelle T4 dargestellt. Dabei wurde beispielsweise bei dem Getriebebedienfeld der Wählhebel in eine Gasse geschoben und in dieser kann nun über Taster manuell getippt werden. Wie in Tabelle 4 vorgegeben, ist dies insbesondere nur im normalen Fahrbetrieb D erlaubt. Auch dieses unter dem Begriff Tipptronic bekannte Verhalten kann durch das Verfahren der Zustände und Zustandsübergänge mit zugeordneten Kennungen beherrscht werden. Als Kennlinie wird dabei keine spezielle Kennlinie festgelegt, adaptiert wird beispielsweise ökonomisch, wobei desweiteren kein Fahrergrundtyp und keine bestimmte Schaltsituation vorgegeben werden. Diese Tabelle T4 kann den Tabellen aus Figur 3 hinzugefügt werden oder einzelne ersetzen. Ebenso wie Tabelle T4 sind weitere Tabellen beispielsweise eine Economic-Tabelle, Ralley bzw. Offroad-Tabelle, Allradtabelle, Komforttabelle oder vgl. der Tipptronic eine Hypertronic mit Gangsimulation usw. als Matrixbestandteil denkbar.

Erfindungsgemäß wird also die Steuerinformation der Kennung der Zustände ausgewertet unabhängig davon, wie man in den jeweiligen Zustand gelangt ist.

Durch die Vielzahl der möglichen Varianten und daraus resultierender Zustände ist es weiterhin sinnvoll, diese Varianten zu reduzieren. Einerseits gelingt dies wie bereits genannt durch die Zusammenfassung gleicher Kennungen in den selben Zustand. Diese Reduktion von Varianten ist insofern sinnvoll, als durch die Matrizenbildung für das Bedienfeld und die Zustände Obermengen gebildet werden. Um diese Obermengen möglichst gering zu halten, können andere Möglichkeiten zu Variantenreduktion herangezogen werden.

Eine Möglichkeit ist, den Zustandswechsel beispielsweise durch das Getriebebedienfeld initiiert applizierbar mittels Automatentabelle zu definieren. Dabei werden alle Zustände die durch äußeren Signale, insbesondere das Getriebebedienfeld erreicht werden sollen, codiert. So erhält beispielsweise der Neutralzustand dargestellt durch Wählhebelpositionen P, R und N im Normalbetrieb die Codierung 0. Der Sportzustand 1, der winterzustand 2 und ein möglicher Manuellzustand 3, binär codierbar in 2 Bit. Von Elementen des Getriebebedienfeldes also den Bedienelementen, insbesondere den Tastern/Schaltern werden der aktuelle als auch der Zustand des letzten Zyklus benutzt.

Der Sporttaster also mit dem aktuellen Zustand S(0) und dem vergangenen S(-1).

Der Wintertaster mit W(0) und W(-1) und
der Manuelltaster mit M(0) und M(-1).

Der aktuelle Zustand der sich aus den vorangegangenen Bedienungen der Taster oder der äußeren Signale beispielsweise durch Sensoren oder ein weiteres Steuergerät ergibt, wird mittels eines Zustandsautomaten bestimmt. Nach Neustart oder Reset steht der Automat im Zustand Neutral. Je nach äußerem Eingangssignal wird in die Zustände entsprechend Figur 2 gewechselt. Um den neuen aktuellen Zustand STA(0) zu ermitteln, wird aus dem letzten Zustand STA(-1) und den aktuellen Eingangssignalzuständen S(0), W(0), M(0), das zusammengesetzte Eingangssignal EIN für die Automatentabelle generiert.

| Bit | 7 | 6 | 5 | 4 | 3 | 2 | 1 | 0 |
|---|---|---|---|---|---|---|---|---|
| EIN | STA(-1) | | M(-1)M(0) | | W(-1) | W(0) | S(-1) | S(0) |

Dadurch ergeben sich in diesem Beispiel theoretisch 256 verschiedene Kombinationen für das Eingangssignal EIN. Für alle Kombinationen wird jetzt in einer applizierbaren Tabelle jeweils ein Ausgangswert AUS festgelegt, der nun folgendermaßen interpretiert wird.

| Bit | 7 | 6 | 5 | 4 | 3 | 2 | 1 | 0 |
|---|---|---|---|---|---|---|---|---|
| AUS | - | - | - | STA(0) | | M(R) | W(R) | S(R) |

Wobei dabei der neue Zustand STA (0) durch Bit 3 und 4 dargestellt ist, sowie die Löschung der vorhergehenden Signale durch Reset also M(R) , W(R), S(R) (mit R wie Reset). Dadurch sind alle Zustandsübergänge durch die Bedienung des Getriebebedienfeldes, sowie äußere Signale vollständig applizierbar.

Um nun also eine trotz der großen Variantenvielfalt möglichst wieder verwendbare Software sprich Steuerprogramm und/oder Daten zu bekommen, ist eine mehrfach instantiierbare Klasse als Softwareobjekt Schalter/Taster eingeführt. Diese Klasse ist von den realen Bedienelementen abgehoben und stellt ein Objekt dar, das diese repräsentiert. Eine Instanz dieser Klasse repräsentiert ein reales Bedienelement, wobei der Typ (Schalter oder Taster) über einen Applikationsschalter (in HW oder SW) festgelegt werden kann. Die Anpassung des Getriebebedienfeldes an ein Projekt kann also sehr einfach durch die (mehrfache) Instanziierung der Klasse Schalter/Taster (Realisierung unterschiedliche Anzahl von Bedienelementen) und der Applikation der Objekte (Realisierung Schalter oder Taster) erfolgen. Es ist also keine Duplizierung von Codeblöcken bei geänderter Bedienelementanzahl und keine Umcodierung bei geändertem Bedienelementtyp (Schalter/Taster) notwendig. Die Klasse Schalter/Taster ist dabei so realisiert, daß sie aufgrund des erfaßten Hardwaresignals einen internen Zustandsautomaten abarbeitet und die übrige Software über eine Methode abfragen kann, ob sich der jeweilige Schalter/Taster in einem aktiven oder inaktiven Zustand befindet. Außerdem ist es oft notwendig den Zustand des Tasters nicht nur durch die Betätigung des realen Tasters verändern zu können, sondern auch durch die Software löschen zu können. Auch dieses Feature wird von der Klasse Schalter/Taster durch eine entsprechende Methodenschnittstelle unterstützt, wenn das betreffende Objekt als Taster appliziert ist.
Bei Schaltern wird diese Funktion naturgemäß nicht unterstützt. Für die anwendende Software ist es transparent, ob eine Instanz der Klasse Schalter/Taster als Schalter oder Taster appliziert ist, da die Methodenschnittstelle unverändert bleibt. Bei Änderung des Bedienelementtyps ist also auch in der anwendenden Software nicht zwingend eine Softwareänderung nötig. So wird z. B. eine Löschanforderung an einen Schalter von der Klasse Schalter/Taster einfach ignoriert, während sie für einen Taster umgesetzt wird.

## Patentansprüche

1. Verfahren zur Steuerung eines Elementes eines Antriebsstranges, welches durch ein Bedienmittel beeinflußbar ist, in einem Fahrzeug mit einer Steuereinheit und einem Speichermittel, wobei das Element und/oder das Bedienmittel in verschiedenen Varianten ausführbar ist, wobei wenigstens eine Kennung in dem Speichermittel abgelegt wird und die Kennung die jeweilige Variante des Elementes und/oder des Bedienmittels repräsentiert, die in dem Fahrzeug enthalten ist und das Element abhängig von der jeweiligen Kennung entsprechend der jeweiligen Variante durch die Steuereinheit gesteuert wird,
**dadurch gekennzeichnet, daß**, insbesondere durch das Bedienmittel, unterschiedliche Zustände der jeweiligen Variante des Elementes vorgegeben werden und für jeden möglichen Zustand jeweils eine Kennung applizierbar zugeordnet ist, wobei die jeweilige Kennung Steuerinformationen enthält, wobei die Steuereinheit die Steuerinformationen der Kennung auswertet und die jeweilige Variante des Elementes durch die Steuereinheit entsprechend der Auswertung der Steuerinformationen angesteuert wird.

2. Verfahren nach Anspruch 1, **dadurch gekennzeichnet, dass** jedem Zustand applizierbar ein Wertetupel zugeordnet wird, das die Steuerinformationen enthält.

3. Verfahren nach Anspruch 1, **dadurch gekennzeichnet, dass** eine Vorgabe eines Zustandes und/oder ein Wechsel aus einem Zustand in einen anderen Zustand durch Signale aus dem Bedienmittel, insbesondere des Getriebebedienfeldes, oder Sensorsignale oder Signale weiterer Steuereinheiten ausgelöst wird.

4. Verfahren nach Anspruch 1, **dadurch gekennzeichnet, dass** wenigstens zwei Zustände aus einer Menge von Zuständen, die wenigstens einen Neutralzustand, wenigstens einen Winterzustand, wenigstens einen Sportzustand, wenigstens einen Economiczustand, wenigstens einen Geländezustand, wenigstens einen Komfortzustand, wenigstens einen Manuellzustand und wenigstens einen Normalfahrzustand sowie wenigstens einen Zustand Begrenzung enthält, als Zustände vorgegeben werden.

5. Verfahren nach Anspruch 1, **dadurch gekennzeichnet, dass** die Steuerinformationen wenigstens zwei Informationen aus einer Informationsmenge, die Kennlinieninformation, Fahrertypinformation, Adaptionsinformation und Schaltsituationsinformation sowie Priorisierungsinformation enthält, umfaßt.

6. Verfahren nach Anspruch 1, **dadurch gekennzeichnet, dass** eine Reduktion der Anzahl der Zustände durch Zusammenfassung gleicher Kennungen und/oder Verwendung einer Zustandstabelle durchgeführt wird.

7. Vorrichtung zur Steuerung eines Elementes (17) eines Antriebsstranges, welches ein Bedienmittel (20) zur Beeinflussung des Elementes enthält, in einem Fahrzeug mit einer Steuereinheit (11) und einem Speichermittel, wobei das Element und/oder das Bedienmittel in verschiedenen Varianten ausführbar ist, wobei wenigstens eine Kennung in dem Speichermittel abgelegt ist und die Kennung die jeweilige Variante des Elementes und/oder des Bedienmittels repräsentiert, die in dem Fahrzeug enthalten ist und die Steuereinheit das Element abhängig von der jeweiligen Kennung entsprechend der jeweiligen Variante steuert,
**dadurch gekennzeichnet, daß**, insbesondere durch das Bedienmittel, eine Vorgabe unterschiedlicher Zustände der jeweiligen Variante des Elementes erfolgt und für jeden möglichen Zustand jeweils eine Kennung applizierbar zugeordnet ist, wobei die jeweilige Kennung Steuerinformationen enthält wobei die Steuereinheit die Steuerinformationen der Kennung auswertet und eine Ansteuerung der jeweiligen Variante des Elementes durch die Steuereinheit entsprechend der Auswertung der Steuerinformationen erfolgt.

8. Vorrichtung nach Anspruch 7, **dadurch gekennzeichnet, dass** Mittel enthalten sind, die jedem Zustand applizierbar ein Wertetupel zuordnen, welches die Steuerinformationen enthält.

9. Steuereinheit zur Steuerung eines Elementes (17) eines Antriebsstranges, welches durch ein Bedienmittel (20) beeinflussbar ist, in einem Fahrzeug, mit einem Speichermittel, wobei das Element und/oder das Bedienmittel in verschiedenen Varianten ausführbar ist, wobei wenigstens eine Kennung in dem Speichermittel abgelegt ist und die Kennung die jeweilige Variante des Elementes und/oder des Bedienmittels repräsentiert, die in dem Fahrzeug enthalten ist und die Steuereinheit das Element abhängig von der jeweiligen Kennung entsprechend der jeweiligen Variante steuert,
**dadurch gekennzeichnet, dass**, insbesondere durch das Bedienmittel, eine Vorgabe unterschiedlicher Zustände der jeweiligen Variante des Elementes erfolgt und Mittel enthalten sind, die für jeden möglichen Zustand jeweils eine Kennung applizierbar zuordnen, wobei die jeweilige Kennung Steuerinformationen entbält, wobei die Steuereinheit die Steuerinformationen der Kennung auswertet und eine Auswertung der jeweiligen Variante des Elementes durch die Steuereinheit entsprechend der Auswertung der Steuerinformationen erfolgt.

10. Steuereinheit nach Anspruch 9, **dadurch gekennzeichnet, dass** Mittel enthalten sind, die jedem Zustand apptizierbar ein Wertetupel zuordnen, welches die Steuerinformationen enthält.

## Claims

1. Method for controlling an element of a drive train, which element can be influenced by a control means, in a vehicle having a control unit and a memory facility, it being possible for the element and/or the control means to be embodied in different variants, at least one characteristic being stored in the memory facility and the characteristic representing the particular variant of the element and/or of the control means contained in the vehicle, and the element being controlled by the control unit as a function of the particular characteristic in accordance with the particular variant, **characterized in that** different states of the particular variant of the element are specified, in particular, by the control means, and a respective characteristic is applicably assigned for each possible state, the particular characteristic containing control information items, the control unit evaluating the control information items contained by the characteristic and the particular variant of the element being activated by the control unit in accordance with the evaluation of the control information items.

2. Method according to Claim 1, **characterized in that** each state is applicably assigned a value-tuple which contains the control information items.

3. Method according to Claim 1, **characterized in that** a specification of a state and/or a change from one state into another state is triggered by signals from the control means, in particular of the gearbox control panel, or sensor signals or signals of further control units.

4. Method according to Claim 1, **characterized in that** at least two states from an array of states including at least one neutral state, at least one winter state, at least one sports state, at least one economic state, at least one all-terrain state, at least one comfort state, at least one manual state and at least one normal driving state and also at least one restriction state are specified as states.

5. Method according to Claim 1, **characterized in that** the control information items comprise at least two information items from an array of information which contains characteristic-curve information, driver-type information, adaptation information and gear change situation information and also prioritizing information.

6. Method according to Claim 1, **characterized in that** a reduction in the number of states is carried out by combining identical characteristics and/or using a table of states.

7. Device for controlling an element (17) of a drive train, which element contains a control means (20) for influencing the element, in a vehicle having a control unit (11) and a memory facility, it being possible for the element and/or the control means to be embodied in various variants, at least one characteristic being stored in the memory facility, and the characteristic representing the particular variant of the element and/or of the control means contained in the vehicle, and the control unit controlling the element as a function of the particular characteristic in accordance with the particular variant, **characterized in that** a specification of different states of the particular variant of the element takes place, in particular, by the control means, and a respective characteristic is applicably assigned for each possible state, the particular characteristic containing control information items, the control unit evaluating the control information items and the particular variant of the element being activated by the control unit in accordance with the evaluation of the control information items.

8. Device according to Claim 7, **characterized in that** means are included which applicably assign to each state a value-tuple which contains the control information items.

9. Control unit for controlling an element (17) of a drive train, which element can be influenced by a control means (20), in a vehicle, having a storage facility, it being possible for the element and/or the control means to be embodied in various variants, at least one characteristic being stored in the memory facility and the characteristic representing the particular variant of the element and/or of the control means contained in the vehicle, and the control unit controlling the element as a function of the particular characteristic in accordance with the particular variant, **characterized in that** a specification of different states of the particular variant of the element takes place, in particular, by the control means, and means are included which applicably assign a respective characteristic for each possible state, the particular characteristic containing control information items, the control unit evaluating the control information items of the characteristic and the particular variant of the element being activated by the control unit in accordance with the evaluation of the control information items.

10. Control unit according to Claim 9, **characterized in that** means are included which applicably assign to each state a value-tuple which contains the control information items.

## Revendications

1. Procédé de commande d'un élément d'une chaîne cinématique de véhicule, influençable par un moyen de commande, comprenant une unité de commande et une unité de mémoire, l'élément et/ou le moyen de commande étant réalisable sous différentes variantes, avec au moins une caractéristique étant déposée dans le moyen de mémoire et représentant la variante respective de l'élément et/ou du moyen de commande contenue dans le véhicule, l'élément étant commandé par l'unité de commande en fonction de la caractéristique respective correspondant à la variante respective,
**caractérisé en ce que**
le moyen de commande prédétermine différents états des variantes respectives de l'élément et associe une caractéristique applicable respectivement à chaque état possible, la caractéristique respective contenant des informations de commande, et l'unité de commande analyse les informations de commande de la caractéristique et permet de commander la variante respective de l'élément en fonction de l'analyse des informations de commande.

2. Procédé selon la revendication 1,
**caractérisé en ce qu'**
un uplet de valeurs, qui contient les informations de commande, est associé à chaque état applicable.

3. Procédé selon la revendication 1,
**caractérisé en ce que**
des signaux émis par le moyen de commande, notamment le pupitre de transmission, ou des signaux de détection ou des signaux d'autres unités de commande, déclenchent une prédétermination d'un état et/ou d'un changement d'état dans un autre état.

4. Procédé selon la revendication 1,
**caractérisé en ce que**,
parmi les états, au moins deux sont prédéterminés et compris dans une liste d'états qui contient au moins un état Neutre, au moins un état Hiver, au moins un état Sport, au moins un état Économie, au moins un état Terrain, au moins un état Confort, au moins un état Manuel et au moins un état Conduite normale ainsi qu'au moins un état Limitation.

5. Procédé selon la revendication 1,
**caractérisé en ce que**
les informations de commande comprennent au moins deux informations comprises dans une liste d'informations, qui contient des informations de caractéristiques, des informations de type de conducteur, des informations d'adaptation et des informations de situation de commutation ainsi que des informations de priorité.

6. Procédé selon la revendication 1,
**caractérisé en ce que**
le regroupement des mêmes caractéristiques et/ou de la même utilisation d'un tableau d'états permet d'obtenir une réduction du nombre d'états.

7. Dispositif de commande d'un élément (17) d'une chaîne cinématique de véhicule, qui contient un moyen de commande (20) pour influencer l'élément, comprenant une unité de commande (11) et une unité de mémoire, l'élément et/ou le moyen de conduite étant réalisable sous différentes variantes, avec au moins une caractéristique déposée dans le moyen de mémoire et représentant la variante respective de l'élément et/ou du moyen de commande contenue dans le véhicule, l'unité de commande commandant l'élément en fonction de la caractéristique respective correspondant à la variante respective,
**caractérisé en ce qu'**
en particulier le moyen de conduite permet une prédétermination de différents états des variantes respectives de l'élément et associe une caractéristique applicable respectivement à chaque état possible, dans la caractéristique respective contenant des informations de commande, et analyse les informations de commande de la caractéristique et permet une commande de la variante respective de l'élément en fonction de l'analyse des informations de commande.

8. Dispositif selon la revendication 7,
**caractérisé en ce que**
on prévoit des moyens qui associent un uplet de valeurs, qui contient les informations de commande, à chaque état applicable.

9. Unité de commande d'un élément (17) d'une chaîne cinématique de véhicule, influençable par un moyen de commande (20), comprenant une unité de mémoire, l'élément et/ou le moyen de commande étant réalisable sous différentes variantes, avec au moins une caractéristique déposée dans le moyen de mémoire et représentant la variante respective de l'élément et/ou du moyen de commande contenue dans le véhicule l'unité de commande commandant l'élément en fonction de la caractéristique respective correspondant à la variante respective,
**caractérisée en ce qu'**
en particulier le moyen commande permet une prédétermination de différents états des variantes respectives de l'élément, et des moyens associent une caractéristique applicable respectivement à chaque état possible, la caractéristique respective contenant des informations de commande, et l'unité de commande analyse les informations de commande de la caractéristique et permet une commande de la variante respective de l'élément en fonction de l'analyse des informations de commande

10. Unité de commande selon la revendication 9,
**caractérisée en ce que**
des moyens associent un uplet de valeurs, qui contient les informations de commande, à chaque état applicable.
